Europäisches Patentamt

European Patent Office

Office européen des brevets

(11) Numéro de publication: **0 065 462**
A1

(12) **DEMANDE DE BREVET EUROPEEN**

(21) Numéro de dépôt: 82400863.5

(22) Date de dépôt: **10.05.82**

(51) Int. Cl.³: **A 23 L 1/236**, A 23 L 1/227, A 23 L 1/23, A 23 L 1/30, A 23 J 3/00

(30) Priorité: **11.05.81 FR 8109326**

(43) Date de publication de la demande: **24.11.82**
**Bulletin 82/47**

(84) Etats contractants désignés: **AT BE CH DE GB IT LI LU NL SE**

(71) Demandeur: **PIERRE FABRE S.A., 125, rue de la Faisanderie, F-75116 Paris (FR)**

(72) Inventeur: **Dubois, Jacques, 61, avenue de Roquecourbe, F-81100 Castres (FR)**
Inventeur: **Fabre, Jacques, 91bis, avenue de Lautrec, F-81100 Castres (FR)**

(74) Mandataire: **Corre, Jacques Denis Paul et al, Cabinet Regimbeau 26, Avenue Kléber, F-75116 Paris (FR)**

(54) Association édulcorante exempte de sucre et son procédé de préparation.

(57) La présente invention concerne une nouvelle association édulcorante exempte de sucre et son procédé de préparation.

La composition édulcorante selon l'invention est caractérisée en ce qu'elle contient à titre de principe actif édulcorant au moins un amino-acide choisi parmi l'alanine ou la β-alanine, le glycocolle, le tryptophane, la proline, l'hydroxyproline et la sérine.

EP 0 065 462 A1

ASSOCIATION EDULCORANTE EXEMPTE DE SUCRE ET SON
PROCEDE DE PREPARATION.

La présente invention concerne une nouvelle composition édulcorante exempte de sucre et son procédé de préparation.

La présente invention concerne une nouvelle composition édulcorante exempte de sucre qui est non cariogène. De préférence ladite composition selon l'invention est d'origine naturelle assimilable et éventuellement de valeur nutritive améliorée.

Une telle composition a des applications identiques à celles des différents édulcorants de synthèse déjà connus, mais peut aussi être utilisée en diététique comme supplément protéique. Une telle composition peut être utilisée indifféremment sous forme sèche ou sous forme liquide.

Les édulcorants ou substances sucrantes connus à ce jour sont essentiellement de deux origines distinctes, naturelle et synthétique. Les édulcorants d'origine naturelle sont principalement les sucres. Il s'agit de produits énergétiques cariogènes et diabétogènes. Cette première catégorie d'édulcorants contient également divers végétaux, la Stevioside, la Miraculine, etc. Il convient de noter à propos de ces derniers édulcorants d'origine végétale qu'à ce jour aucun d'entre eux n'a obtenu d'autorisation de commercialisation en raison de problèmes toxicologiques.

La deuxième catégorie des édulcorants englobe les édulcorants de synthèse parmi lesquels on peut citer à titre d'exemples la saccharine, le cyclamate, l'aspartame. Ces édulcorants dont le plus connu est la saccharine sont hypo-caloriques, non cariogènes et non diabétogènes. Cependant leur utilisation au long cours semble présenter quelques inconvénients;ils sont notamment suspects du point de vue carcinogène.

La nouvelle composition édulcorante selon l'invention présente par rapport aux produits édulcorants de la technique antérieure un certain nombre d'avantages déterminants parmi lesquels on relèvera le caractère non cariogène et non diabétogène, l'absence totale de toxicité et notamment d'effet cancérigène et enfin leur origine naturelle.

Conformément à la présente invention, la composition édulcorante exempte de sucre est caractérisée en ce qu'elle contient à titre de principe actif édulcorant au moins un amino-acide choisi parmi l'alanine et la β-alanine, le glycocolle, le tryptophane, la proline, l'hydroxyproline et la sérine.

Selon une caractéristique additionnelle de la présente invention, la composition édulcorante peut également contenir, en vue de lui conférer une valeur diététique supérieure, au moins un amino-acide additionnel choisi parmi la cystine, la thréonine, l'arginine, la tyrosine et l'isoleucine.

Les compositions édulcorantes selon la présente invention constituent une substance assimilable et nutritive apportant à l'organisme des amino-acides qui sont des composés essentiels à son bon fonctionnement.

Les compositions édulcorantes selon la présente invention pourront être utilisées sous n'importe quelle forme liquide ou solide en tant qu'édulcorants destinés notamment à être substitués au sucre dans divers produits alimentaires, diététiques ou encore dans des médicaments. Cependant il est clair que de telles compositions édulcorantes pourront également être utilisées en diététique en tant que supplément protéique.

Il est bien clair que les compositions édulcorantes selon la présente invention pourront également contenir un certain nombre d'autres substances additionnelles telles que des exalteurs de goût classiques.

Pour donner aux compositions édulcorantes selon l'invention un pouvoir sucrant plus puissant en fonction du poids total de la composition, on fera appel en majorité aux amino-acides suivants : l'alanine ou la β-alanine, le glycocolle ou le tryptophane.

Quelle que soit la valeur édulcorante recherchée des compositions de la présente invention, il conviendra d'observer un taux de proline relativement faible par rapport à l'ensemble des autres constituants amino-acides et de préférence un taux de proline restant toujours inférieur à environ 30 % en poids du poids total de la composition. Dans le cas où l'on souhaite obtenir une composition ayant une valeur diététique supérieure on fera en outre appel à au moins un autre amino-acide choisi parmi la cystine, la thréonine, l'arginine, la tyrosine et l'isoleucine.

Conformément à la présente invention, on utilisera de préférence les isomères optiques L des acides aminés, qui sont les seuls métabolisables. Il est cependant clair que l'emploi de mélanges racémiques ou encore d'isomères optiques D est également envisageable.

Afin d'illustrer les compositions édulcorantes exemptes de sucre, on mentionnera les deux exemples non limitatifs suivants :

| Exemple 1 | % en poids |
|---|---|
| glycocolle | 30 |
| alanine | 20 |
| tryptophane | 10 |
| proline | 5 |
| hydroxyproline | 15 |
| sérine | 20 |

Une telle composition possède un pouvoir sucrant compris entre 4 et 8.

| Exemple 2 | % en poids |
|---|---|
| glycocolle | 20 |
| alanine | 15 |
| tryptophane | 10 |
| proline | 5 |
| hydroxyproline | 10 |
| sérine | 10 |
| cystine | 10 |
| thréonine | 5 |
| arginine | 5 |
| tyrosine | 5 |
| isoleucine | 5 |

Une telle composition possède un pouvoir sucrant très légèrement inférieur compris entre 3 et 7, mais offre sur le plan diététique un meilleur équilibre en amino-acides.

La présente invention concerne également un procédé de préparation des compositions édulcorantes précédemment évoquées. Un tel procédé consiste à préparer les compositions édulcorantes en partant d'un hydrolysat ou d'un mélange d'hydrolysats de protéines d'origine animale ou végétale et en particulier à partir d'un hydrolysat de gélatine.

Selon une caractéristique particulière de la présente invention les compositions édulcorantes seront obtenues à partir de gélatine qui est une protéine hydrolysable contenant notamment les amino-acides suivants :

| | |
|---|---|
| glycocolle | 25,5 % |
| alanine | 8,7 % |
| proline | 18 % |
| hydroxyproline | 14,1 % |
| sérine | 0,4 % |
| cystine | 0,1 % |
| thréonine | 1,9 % |
| arginine | 8,1 % |
| tyrosine | 0,5 % |
| isoleucine | 1,4 % |

Il est bien clair que, partant par exemple d'une protéine telle que la gélatine, il est parfaitement possible de corriger tel ou tel pourcentage d'amino-acides particuliers en fonction de la destination exacte de la composition édulcorante selon l'invention. C'est ainsi qu'il est en particulier possible d'additionner un pourcentage déterminé de tryptophane non contenu dans la gélatine.

Selon la présente invention le procédé consiste dans une première étape à réaliser la préparation d'une solution de protéines hydrolysables, en particulier d'une solution de gélatine.

La seconde étape du procédé, à savoir l'hydrolyse, peut être réalisée par voie enzymatique à l'aide de n'importe quelle enzyme protéolytique. L'hydrolyse peut encore être réalisée par voie chimique à l'aide d'un acide ou encore d'une base forte.

La troisième étape du procédé selon l'invention est une étape de séparation qui pourra par exemple être mise en oeuvre par adsorption sur colonne, ou encore par précipitation sélective en tirant profit des propriétés diélectriques des différents amino-acides, c'est-à-dire de leurs valeurs ou de leurs gammes de valeurs de points isoélectriques.

A titre d'illustration on indiquera ci-après les valeurs de points isoélectriques à 25° de quelques amino-acides susceptibles d'entrer dans la composition édulcorante selon l'invention.

<u>TABLEAU</u>

| AMINO ACIDES | POINT ISOELECTRIQUE (à 25°C) |
|---|---|
| proline | 6,30 |
| thréonine | 6,16 |
| isoleucine | 6,02 |
| alanine | 6,00 |
| glycocolle | 5,97 |
| tryptophane | 5,89 |
| hydroxyproline | 5,83 |
| sérine | 5,68 |
| tyrosine | 5,66 |
| cystine | 5,05 |

De façon classique, le procédé de préparation s'achève par une étape de purification et une étape de cristallisation.

Bien entendu, la présente invention ne se limite nullement aux exemples particuliers précédemment décrits, mais il est parfaitement possible, sans pour autant sortir du cadre de la présente invention, d'en imaginer un certain nombre de variantes, en particulier en ce

7

qui concerne les compositions quantitatives des exemples précédemment indiqués à simple titre d'illustration. Il est clair que la préparation de ces compositions édulcorantes à partir d'hydrolysats ou de mélange d'hydrolysats de protéines d'origine naturelle peut également subir un certain nombre de variantes.

REVENDICATIONS

1) Composition édulcorante exempte de sucre, caractérisée en ce qu'elle est essentiellement obtenue directement à partir d'un hydrolysat ou d'un mélange d'hydrolysats de protéines d'origine animale et/ou végétale, en particulier à partir d'un hydrolysat de gélatine, et en ce qu'elle contient à titre de principe actif édulcorant au moins un amino-acide choisi parmi l'alanine ou la β-alanine, le glycocolle, le tryptophane, la proline, l'hydroxyproline et la sérine.

2) Composition édulcorante selon la revendication 1, caractérisée en ce qu'elle contient au moins un amino-acide additionnel choisi parmi la cystine, la thréonine, l'arginine, la tyrosine et l'isoleucine, en vue de lui conférer une valeur diététique supérieure.

3) Composition édulcorante selon l'une des revendications 1 et 2, caractérisée en ce qu'elle contient de la proline à raison d'une proportion maximale de 30 % en poids.

4) Composition édulcorante selon l'une des revendications 1 à 3, caractérisée en ce qu'elle contient un ou plusieurs desdits amino-acides sous leur forme d'isomère optique L.

5) Composition édulcorante selon l'une des revendications 1, 3 et 4, caractérisée en ce qu'elle répond à la composition suivante :

| | |
|---|---|
| glycocolle | 30 % en poids |
| alanine | 20 % en poids |
| tryptophane | 10 % en poids |
| proline | 5 % en poids |
| hydroxyproline | 15 % en poids |
| sérine | 20 % en poids. |

6) Composition selon l'une des revendications 1 à 5, caractérisée en ce qu'elle répond à la composition suivante :

| | |
|---|---|
| glycocolle | 20 % en poids |
| alanine | 15 % en poids |
| tryptophane | 10 % en poids |
| proline | 5 % en poids |
| hydroxyproline | 10 % en poids |
| sérine | 10 % en poids |
| cystine | 10 % en poids |
| thréonine | 5 % en poids |
| arginine | 5 % en poids |
| tyrosine | 5 % en poids |
| isoleucine | 5 % en poids. |

7) Procédé de préparation d'une composition édulcorante selon l'une des revendications 1 à 6, caractérisé en ce qu'il est essentiellement obtenu directement à partir d'un hydrolysat ou d'un mélange d'hydrolysats de protéines d'origine animale et/ou végétale, en particulier à partir d'un hydrolysat de gélatine.

8) Procédé selon la revendication 7, caractérisé en ce que ledit hydrolysat est obtenu par voie enzymatique à l'aide d'une enzyme protéolytique.

9) Procédé selon la revendication 7, caractérisé en ce que ledit hydrolysat est obtenu par voie chimique à l'aide d'un acide ou d'une base forte.

10) Procédé selon l'une des revendications 7 à 9, caractérisé en ce que la séparation du ou des amino-acides est réalisée par adsorption sur colonne.

11) Procédé selon l'une des revendications 7 à 9, caractérisé en ce que la séparation du ou des amino-acides est réalisée par précipitation sélective en fonction des valeurs ou de gammes de valeurs de points isoélectriques desdits amino-acides.

# RAPPORT DE RECHERCHE EUROPEENNE

Office européen
des brevets

Numéro de la demande

EP 82 40 0863

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| Y | US-A-3 833 745 (J.F.LONTZ et al.) *Revendications 1-3; colonne 3, lignes 33-70; colonne 4, lignes 10-21* | 1,3-6 | A 23 L 1/236 A 23 L 1/227 A 23 L 1/23 A 23 L 1/30 A 23 J 3/00 |
| Y | US-A-3 510 310 (R.G.BRECKWOLDT) *Revendications 1-5; colonne 1, ligne 54 - colonne 2, ligne 10* | 1-6 | |
| Y | FR-A-2 075 612 (AJINOMOTO) *Revendications 1-3* | 1,3,5, 6 | |
| Y | AU-B- 449 769 (ICHIKAWA WOOLEN TEXTILE) *Revendications 1-6; tableaux 1,2; page 3, lignes 2-9* | 1-11 | |
| A | DE-A-1 517 065 (KIKKOMAN SHOYU) *Revendication 1; figure 2; page 4, dernier alinéa - page 5, alinéa 1* & FR - A - 1 469 024 | 1-6 | |
| A | INTERNATIONALE ZEITSCHRIFT FUR VITAMINE FORSCHUNG, vol. 39, 1969, pages 320-322, Berne (CH); J.SOLMS: "Über den Geschmack von Aminosäuren, Peptiden und Proteinen". *Page 320, alinéa 2* | 1-6 | |

**DOMAINES TECHNIQUES RECHERCHES (Int. Cl. 3)**

A 23 L

Le présent rapport de recherche a été établi pour toutes les revendications

| Lieu de la recherche | Date d'achèvement de la recherche | Examinateur |
|---|---|---|
| LA HAYE | 10-08-1982 | VAN MOER A.M.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82